# EUROPEAN PATENT SPECIFICATION

(11) **EP 3 077 309 B1**
(45) Date of publication and mention of the grant of the patent: **16.01.2019**
(21) Application number: 14860579.3
(22) Date of filing: 05.11.2014
(51) Int. Cl.: B29C 47/00, B65H 41/00, B65H 35/02, B31B 155/00

(54) **A SYSTEM AND A METHOD FOR PROVIDING IONISED AIR TO EXTRUSION BLOW MOLDED WEB MATERIALS, AND A CUTTER FOR CUTTING A TUBE SHAPED EXTRUSION BLOW MOLDED WEB INTO TWO OR MORE WEBS**
SYSTEM UND VERFAHREN ZUR BEREITSTELLUNG IONISIERTER LUFT FÜR EXTRUSIONSBLASGEFORMTE BAHNMATERIALIEN UND SCHNEIDEVORRICHTUNG ZUM SCHNEIDEN EINER ROHRFÖRMIGEN EXTRUSIONSBLASGEFORMTEN BAHN IN ZWEI ODER MEHRERE BAHNEN
SYSTÈME ET PROCÉDÉ POUR FOURNIR DE L'AIR IONISÉ À DES MATÉRIAUX EN BANDE MOULÉS PAR EXTRUSION-SOUFFLAGE, ET DISPOSITIF DE COUPE POUR COUPER UNE BANDE MOULÉE PAR EXTRUSION-SOUFFLAGE EN FORME DE TUBE EN DEUX OU PLUSIEURS BANDES

(30) Priority: 06.11.2013 DK 201370647
(43) Date of publication of application: 12.10.2016
(73) Proprietor: Jesco Holding ApS, 5240 Odense NØ (DK)
(72) Inventor: RENNEBOD, Jes Bo, DK-5240 Odense NØ (DK)
(74) Representative: Gregersen, Niels Henrik
(86) International application number: PCT/DK2014/050363
(87) International publication number: WO 2015/067273

(56) References cited:
- FR-A- 1 258 181
- GB-A- 1 371 858
- GB-A- 1 598 240
- NL-A- 7 902 706
- US-A- 3 618 476
- US-A1- 2004 255 744
- US-A1- 2005 077 171

## Description

### Field of the Invention

The present invention relates to a web processing apparatus and a method for processing a tube shaped web material into one or more sheets of the web material or at least two webs having one surface of the web opposed towards one surface of the other sheet and which are forwarded through the apparatus in parallel.

The present invention also relates to a slitting knife for an apparatus for processing a web, such as a tube shaped web, and for cutting the web into one or more sheets of the web material, comprising a knife body having a slit in which one or more blades are arranged for cutting the web material when introduced into the slit, and wherein the knife body comprises a first body part intended for passage at the internal side of the web material and a second body part intended passage at the opposite side of the web material, wherein the knife body comprises means for introducing and passing air to air nozzles arranged in the slit area of at least the first body part for introducing air to the internal side of the web material.

### Background of the Invention

It is well known to provide different types of webs e.g. plastic foils, film or laminates, by extrusion blow molding. The resultant web is tube shaped and is subsequently cut into two or more webs, e.g. by knives. Each web material is usually subsequently rolled onto a core or the like to provide a roll of the web material. Subsequently, the web may also be cut across the travelling direction, when the required amount of web material is rolled onto the core.

Such webs are e.g. used as stretch films, shrink films, including adhesive stretch films, i.e. so-called cling films, or the like and are frequently used for packaging of foods and other goods.

When the webs are produced they are transported through the production system at a high speed and may come into contact with rollers, knives, pass by air bars or the like, during the production the web may become electrostatic. Similarly, two sheets of a web/foil material are separated from each other, or when the web is unrolled from a roll, or when it is used for packaging of materials, e.g. foods, the web is likewise passing through a packaging apparatus, preferably also at high speed, it also tends to become electrostatic. This may cause the web material to cling to items itself and/or to the processing machinery. When this happens, the film may not be registered correctly by the control system for the processing machinery, resulting in significant amounts of scrap web produced. The cost penalties associated with uncontrolled static electricity in web manufacturing processes are many and varied. Problems with electrostatic webs can force companies to run their productions machinery at much slower speeds than necessary if there were no problems with electrostatic effects. The electrostatically charged web can be a direct cause of production problems such as poorly wound reels, which also will be difficult to fit on to machines using the web for packaging and may thus cause feed problems. This leads to poor process control, both during manufacturing the web and during subsequent packaging using the web material.

In addition, there is a risk of corona discharges when the webs become electrostatically charged, which can result in electrical shocks on an operator and/or fires or explosions arising from the electrostatically charged web.

In addition, the electrostatic effect will cause the web material to cling to production machinery used during packaging, etc. and/or to other items or surfaces other than the item to be packaged. This is in particular the case when edge slitting tube shaped webs into separate sheets using knives without supply of pressurised air or when supplying pressurised air having an insufficient pressure for obtaining an air cushion effect between the knife body and the web.

In order to provide an anti-static effect to the web materials, anti-static additives are typically added to the film. Typically particles of quartz, silicates, lime, titanium oxide or mixtures thereof are used as anti-static additives added to the web material.

Such particles, which are present in the web material cause abrasion on items which come into direct contact with the travelling web material, e.g. on rollers or knives and/or holders for knives which cut the tube shaped web into two or more webs.

Prior art knives for cutting web materials are either provided with guiding wheels and are intended for travelling a distance, e.g. across the web material, or stationary knives intended for cutting the web material when it passes the knife, e.g. edge slitting knives for cutting a tube shaped web material into two or more webs when the tube shaped web passes the knife. Stationary knives may be equipped with guiding wheels in the slit, where the guiding wheels are arranged to contact the folded edge in the tube shaped web and for reducing contact between the knife body and the web during edge slitting and for guiding the web to the blade, and thereby provide improved quality of the edge slitting, and thus improve quality of the resulting web.

Thus today such knife holders are provided in a metallic alloy, typically a steel alloy, in order to be able to withstand abrasion from the particles in the film. In addition, such knife holders are often provided with a low friction surface coating, of polymeric nature, e.g. fluoropolymers, such as PTFE, also known as Teflon®, or ceramic or metallic coatings based on e.g. molybdenum, titanium, chrome and/or nickel . The low friction coatings reduce wear on the machinery parts in question, e.g. the knife holders, as well as on the web material itself. Such low friction coatings used on web producing machinery need not to be approved for use in connection with foodstuffs, since there is no direct contact with the food.

The low friction surface coating reduces the abrasion arising from the particles in the web material because friction is reduced, but the abrasion problem is not eliminated. Instead particles of the low-friction coating may adhere to the web material and eventually end up in foods, when the foodstuff is packaged using the web material. Therefore, particles, e.g. of the coating applied to the knife holder, which are abraded from the surfaces by the high speed travelling web may end up on the film material and eventually also in the foodstuff when they are packaged using the web material. Thus, the foodstuffs may be polluted with small particles of materials which are not approved for contact with foodstuffs, and which may cause health problems to the consumer of the food.

In order to further reduce electrostatic effects on the web material it is also known to apply air bars for perpendicular to the web in order to apply ionised air to the upper and/or lower surface of the extrusion blow moulded tube and/or to the two or more webs arising from slitting /cutting the tube shaped web into two or more web sheets. This may reduce the tendency for the films to adhere to processing machinery, but it does not reduce the tendency of the web material to cling to each other.

From US3618476 A an apparatus and a method for separating two webs of plastic film forwarded through the apparatus in parallel is also known, where ionised air is introduced between the webs by an air nozzle placed in the side of the apparatus in order to neutralise any static electrical charges which might inhibit the separation of the webs. However, ionised air is not being introduced between the webs by air nozzles in a knife body of a slitting knife being used to form the webs from a tube shaped web material.

GB 1371858 A a web processing apparatus for processing a tube shaped web material into one or more sheets of the web or at least two webs having one surface of the web opposed towards one surface of the other sheet and which are forwarded through the apparatus in parallel. The apparatus comprises means for introducing ionised air into the area between two essentially parallel and opposing surfaces of the web material.

US 2004/255744 A1 discloses a cutting knife for sheet-like material provided with outlet openings for blown air. The knife body comprises means for introducing and passing air to air nozzles arranged in the slit area of at least the first body part for introducing air to the internal side of the web material.
US 2005/ 077171 A discloses the effect of using an ioniser to ionise the air in preparation of stacks of sheets.

### Object of the Invention

Thus, it is an object of the present invention to provide a system and a method which reduce or even eliminate problems arising from electrostatic effects on the surfaces of the web material during production and processing thereof.

In addition, it is an object of the present invention to provide a system and a method which reduces electrostatic effects on the produced web material and thus can ensure that the opposite sides of an extrusion blow moulded tube shaped web or that two parallel web sheets do not cling to each other or to the processing machinery, e.g. frames, knives, rollers etc. during processing.

It is also an object of the present invention to provide means for reducing or eliminating electrostatic effects acting on interior surfaces of extrusion blow moulded web, i.e. a tube shaped material, or between the individual sheets of web material, i.e. on surfaces opposing each other of parallel sheets of web.

In addition, it is an object of the present invention to provide means for reducing or eliminating electrostatic effects acting on interior surfaces of extrusion blow moulded web, i.e. a tube shaped material, or between the individual sheets of web material, i.e. on surfaces opposing each other of parallel sheets of web during cutting/slitting of the tube shaped web into individual sheets of web material.

### Description of the Invention

These objects are achieved by a web processing apparatus and a method for processing a tube shaped web material into one or more sheets of the web material or at least two webs having one surface of the web opposed towards one surface of the other web and which are forwarded through the apparatus in parallel. The web processing apparatus is special in that the apparatus comprises means for introducing ionised air into the area between two essentially parallel and opposing surfaces of the web material.

Hereby it is achieved that the electrostatic effect acting on the surfaces facing each other can be quickly eliminated, thus reducing the tendency of the web sheets to cling to each other and/or to rollers, frames and other machinery. This results in reduced wear on production machinery, in particular knife bodies of edge cutting knives because of the web's reduced tendency to cling to the production machinery, in particular the knife bodies. As the main cause for electrostatic effect usually arise on the surfaces facing each other, e.g. an inner surface in a tube shaped web, applying the ionising effect between the surfaces will cause a quick and effective neutralisation of the electrostatic surfaces. In addition, when blowing air into the area between the sheets, the opposing surfaces are blown away from each other, and thereby easily separated from each other, e.g into two separate sheets. Thus, by supplying a stream of ionised air between two opposing surfaces, a very effective separation of the sheets is achieved. This also reduces or eliminates production problems and errors related to electrostatic effects acting on the web surfaces, in particular the surfaces facing each other. This also results in web production in which the web is easier to control and a more even edge cutting of tube shaped webs, resulting in an overall improved quality of the webs/foils produced.

The present invention provides solutions based on both AC and pulsed DC technologies for optimum electrostatic control. When applying AC technology, a very large number of positive and negative ions are generated following the AC cycle. A statically charged surface of either polarity passing close to this ion cloud will then be quickly neutralised. Pulsed DC technology allows control of not only frequency but also ion balance, i.e. the relative proportion of positive and negative ions. Low frequencies allow longer distance ionisation to be achieved, especially in still air whilst the balance control between positive and negative ions allows the ion output to be adjusted to suit the charge polarity on the target surface(s). Pulsed DC systems can offer optimum solutions for specific materials and more demanding applications.

In one embodiment of the invention, the means for introducing ionised air comprise at least one slitting knife having an air passage and air nozzles in the knife body. Preferably at least two such slitting knives are used, in particular when the tube shaped web is slit into two sheets of web. Alternatively at least 3, 4, 5, 6 or more slitting knives are used, when the tube shaped web is to be cut into a number of sheets. An air inlet of the knife body is connected to an AC or pulsed DC ioniser nozzle. The air passing through the air nozzle is then mixed with positive and/or negative ions as discussed in detail below. The ionised air then passes through the air passage and air nozzles in the knife body, and is expelled in the slit area of the knife body. When cutting an extruded lay-flat tube - sheeting into two or more individual sheets the interior surfaces may cling together resulting in collation problems. These problems are solved when the tube shaped web is separated in the area surrounding the knife body, in particular in front of the knife body when blowing ionised air through the nozzles on the knife body and into the area between the upper layer and the lower layer of the tube shaped web. The ionised air both neutralises the electrostatic effect on the opposing surfaces and blows the opposing surfaces away from each other, thus allowing for effective separation of the web materials in connection with the slitting operation, where the tube shaped web is cut into one, two or more separate sheets. In addition, the ionised pressurised air blown through the nozzles creates an air cushion effect of ionised air around the knife body in the area surrounding the nozzles, e.g. in the slit area. This ionised air cushion has the effect that the web is repelled from knife body, which further reduces or even eliminates the contact area between the web material and the knife body. This further reduces the processing problems relating to the film clinging to the knife body.

In addition, the amount of positively and negatively charged ions in ionised air can be controlled, especially when using a pulsed DC ioniser, whereby the electrostatic effect acting on the surfaces facing each other can be controlled so that the web material is repelled from the surfaces of the knife body. Hereby it is achieved that the processing problems relating to the film clinging to the knife body is elegantly solved.

The ionised air is preferably applied at a pressure of 2-10 bar, such as 4-8 bar, or preferably 5-7 bar in order to be able to provide the above discussed air cushion effect, and to ensure that the upper and lower (sheet) layers are efficiently separated, e.g. prior to slitting the tube shaped web into separate sheets of web. The air pressure of the ionised air can be reduced in relation to prior art systems using non-ionised pressurised air in case an unchanged production speed and web travelling speed are relevant. The anti-static effect of the ionised air acting on the web causes a repelling effect between the knife body and the web, and thus reduces the pressure necessary for obtaining the air cushion effect between the knife body and the web material. Alternatively a higher production speed, and web travelling speed, can be obtained when applying pressurised and ionised air at a pressure corresponding to air pressure used in prior art non-ionised pressurised air edge cutting knife systems.

In addition the outer surface of at least a first part of the knife body may be provided with an area having indentations or grooves, e.g. of circular, oval or polygonal, such as longitudinal channels, rectangular or square shape, in particular a so-called "Golf-ball" surface, having circular indentations. This allows for the ionised air to accumulate in the area having indentations, which then results an ionised air cushion effect, which can repel the web from the knife body so that the web does not come into contact with the knife body, which then reduces or even eliminates the contact area between the web material and the knife body. The reduced contact between the knife body results in a significantly reduced wear of the knife body. In addition, a reduced tendency of the web to cling to the knife body is obtained resulting in a more even edge slitting of the tube shaped web. The abrasion of the knife body is significantly reduced due to less or even no contact with the web material, and the above mentioned particles in the web material, when it passes by the knife body during processing of the tube shaped web. This also improves the overall quality of the web/foils produced on the system. In order to improve the accumulation of ionised air in the area comprising the indentations, additional air nozzles may be arranged in the groove area, e.g. in and/or between the grooves.
the The web processing apparatus, the slitting knife and the method are further special in that at least the air passages and the nozzles are made of a polymeric material. Preferably, a layer of the polymeric material also covers the knife body surface.

Hereby it is achieved that the ionised air is not subjected to contact with metallic surfaces during its passage through and around the knife body. Contact with a metallic surface will cause immediate neutralisation of the ionised air, as the ions will be attracted to the metallic surface, and thus eliminate the neutralising effect on the electrostatic surfaces of the web.

Preferably, the knife body is made of, or comprises surfaces of an electrically non-conductive material, such as a polymeric material, preferably food grade polymer, such as thermoplastic polymers, in particular a homo- or copolymer of polyethylene terephthalate (PETor PET-P) high density polyethylene (HD-PE), polypropylene (PP), polysulfone (PSU), polyetherether ketone (PEEK), or mixtures thereof. The polymer is in a preferred embodiment a homo- or copolymer of polyethylene terephthalate (PET, also called PET-P), optionally co-polymerized with up to 10 % by weight of polytetrafluorethylene (PTFE), which is also known as PETP-TX or PET-TX. The polymers, in particular PET, are thermally and dimensionally stable and provides low friction and good electrical properties, i.e. having a low or no risk of becoming electrostatic due to the rubbing effect of the web when passing the knife body. The polymers, in particular PET, are also approved for contact with foodstuffs. When providing the knife body in a polymeric material, preferably a polymeric material, which is approved for contact with foodstuffs, such as the above mentioned, in particular PET, the risk of contaminating the items to be packaged with toxic particles abraded from the knife body is significantly reduced. In addition, the polymers, in particular PET, provide a surface, which does not attract the ions in the ionised air, and provide a low friction surface, which also reduces risk of wear from the travelling web. In the event of wear the polymeric materials, in particular PET, will result in a smoother surface providing less friction between the knife body and the web, in particular when the knife body is made of the polymer.

In a particularly preferred embodiment, the knife body is made of the above mentioned polymeric materials. Providing the entire knife body of a polymeric material, such as PET or any other of the mentioned polymers, causes the knife body to be produced by a variety of production methods such as injection moulding, shaping by cutting, 3D-printing. Thus, providing a knife body in a polymer material results in a less expensive production, reduced costs for materials, e.g. when casting the knife body, and subsequent processing of the knife body into its final shape and provides the above mentioned advantages.

The knife body may also comprise guiding wheels in the slit, where the guiding wheels are arranged to contact the folded edge in the tube shaped web and for reducing contact between the knife body and the web during edge slitting and for guiding the web to the blade and thereby provide improved quality of the edge slitting, and thus improving quality of the resulting web.

In an embodiment of the web processing apparatus and the method, which does not form part of the present invention, the means for introducing ionised air comprise an ionised air bar arranged between the at least two sheets and perpendicular to the travelling direction of the web material. Preferably the ionised air bar comprises a standard air bar to which an ionising air nozzle is provided at the air inlet as discussed in connection with the knife body. The ionising air bar is provided at a position just after separation of the web sheets and the nozzles on the ionising air bar blows ionised air towards the sheets travelling towards the ionising air bar. Thus, the ionised air is directed towards the sheets at a point where the sheets are intended to separate, e.g. because each sheet of web is subsequently to be wound up on a core.

Hereby it is achieved that two parallel sheets of web which cling to each other when travelling through a web processing apparatus are effectively separated due to the introduction of ionised air between the two sheets. As the opposing surfaces are produced together, e.g. when extrusion blow moulding the tube and then slit into two sheets, a significant risk that the surfaces facing each other become electrostatic, e.g. during cooling of the web and/or due to friction between the opposing surfaces when they travel through the web processing apparatus. When the air bar introduces ionised air between the opposing surfaces, the sheets can be easily separated because the ions in the air neutralise the electrostatic effects on the opposing surfaces and because the sheets are blown apart by the air. Thus, effective separation of the sheets is achieved. This may be used in connection with prior art ionising bars acting from the outside, i.e. from above and below the two travelling webs. However, since an efficient separation of the webs can be provided using the ionised air bar between the sheets, the prior art ionising bars can be dispensed with. The ionising air bar is preferably also coated with or made of a polymeric material, in particular PET as discussed above in relation to the knife body. In addition, the air bar may be an air bar for guiding the web or film onto a roller core as discussed in WO 2013/0156036 A, which is hereby incorporated by reference. The air bar discussed herein for guiding a web onto a core when winding the web onto the core is hollow and comprises at two or more internal compartments extending along the length of said air bar for applying pressurised air of different pressure to at two or more rows of air nozzles. The air supply inlet to the air bar, or to each compartment of the air bar, may thus be provided with an air ioniser as described above. Thereby, ionised pressurised air is supplied, which has defined amount of negative and/or positive ions, which causes a change in polarity on the web surface and further improves the air cushion effect by repelling the web material from the air bar and/or other machinery parts. This may be provided by using a pulsed DC air ioniser, on the pressurised air inlet(s). The air bar is preferably also made of a polymer material, as discussed above, or the internal air passages and the air nozzles, including preferably also the exterior surface, are coated with a polymer material as discussed above.

The present invention also relates to a slitting knife for the above described web processing apparatus comprising a knife body having a slit in which one or more blades are arranged for cutting the web material when introduced into the slit, and wherein the knife body comprises a first body part intended for passage at the internal side of the web material and a second body part intended passage at the opposite side of the web material, wherein the knife body comprises means for introducing and passing air to air nozzles arranged in the slit area of at least the first body part for introducing air to the internal side of the web material. The slitting knife is special in that an air ioniser is connected to an air inlet of the knife body for ionising the air to be passed to the air nozzles.

Hereby it is achieved that the slitting knife can supply the ionised air, as already discussed above to the area inside the tube shaped web in order to separate the upper and the lower part by neutralising any electrostatic effect acting on the inner surface of the tube by means of the ions in the air, and by the pressurised ionised air blowing the upper and lower surfaces away from each other, and thus resulting in less or no contact between the knife body and the Web/foil, resulting in reduced wear because blowing of ionised air causes an air cushion effect of ionised air, around the knife body, and in particular in the slit area where the nozzles expel the ionised air.

This air cushion effect also results in that that the knife body can be produced in a less expensive material as discussed above. Thus, the slitting knife is special in that at least the air inlet, the air passages, the air nozzles and preferably also a coating covering the knife body surface, are made of a polymeric material, preferably a polymer which is approved for use with foodstuffs. In addition, to a less expensive knife body production, this also results in that there is a reduced risk of contaminating foodstuffs or the like to be packaged with particles abraded from the knife body (e.g. metals from the knife body and/or or metallic or non-metallic coatings which can cause health problems when ending up in foodstuffs).

The slitting knife preferably comprises a knife body made of the polymeric material as discussed above.

A similar repelling effect in combination with an air cushion can be obtained by providing the knife body with an electrically conducting surface coating and applying an AC or DC g a current to the conducting layer. This will cause an ionisation of the pressurised air surrounding the surface of the knife body provide a similar repellent effect due to controlled polarisation of the opposing web surfaces.

The objects and the above mentioned effects are also achieved by a method for processing a tube shaped web material into one or more sheets of the web material or at least two webs having one surface of the web opposed towards one surface of the other sheet and which are forwarded through the apparatus in parallel, comprising introducing ionised air into the area between two essentially parallel and opposing surfaces of the web material.

The method is special in that the ionised air is introduced through at least one air passage and air nozzles in a knife body of a slitting knife.

The method is further special ionised air is introduced through at least one air passage and air nozzles in a knife body of a slitting knife, said knife body or at least the air passage and the nozzles, and preferably also the outer surface of the knife body, comprise a electrically non-conducting material.

In an another embodiment, which is not covered by the present invention, ionised air is introduced through an ionised air bar arranged between the at least two sheets and perpendicular to the travelling direction of the web material.

These embodiments also meet the above mentioned objects and achieve the above mentioned effects.

### Description of the Drawing

The present invention will now be described in connection with the drawings in which;

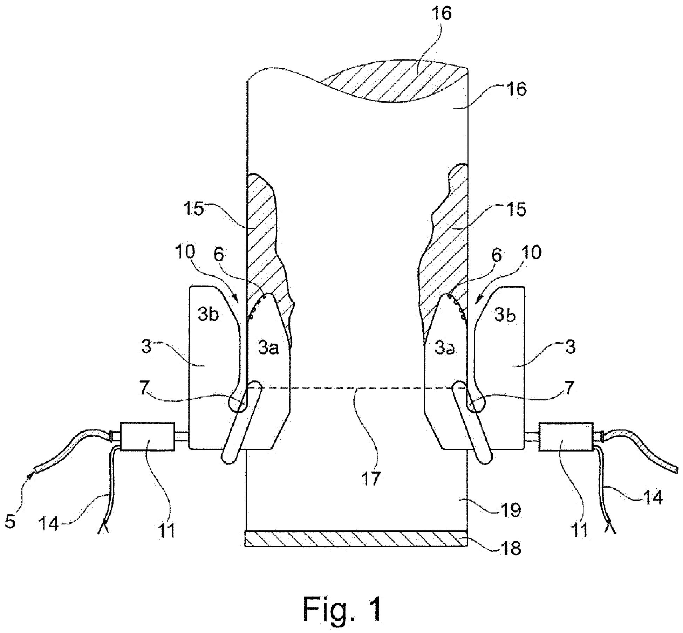

- Fig. 1: shows slitting station of a web processing apparatus for slitting a tube shaped web material into one, two or more separate sheets,
- Fig. 2: shows a slitting knife according to the present invention,
- Figs. 3a-b: show a web processing apparatus comprising first embodiment of an ionising air bar, seen in cross view and in perspective view respectively, and
- Figs. 4a-b: shows a web processing apparatus comprising second embodiment of an ionising air bar in cross view and in perspective view respectively.

### Detailed Description of the Invention

When producing laminates, foils or films, in particular adhesive films, so called cling films, or stretch films, these films are extrusion blow moulded into a tube shaped film or web 16. This web 16 is then passed at high speed through the production machinery, where it cools and is cut in the longitudinal direction into one, usually two, i.e. an upper 19 and a lower sheet 18 (or sometimes more), which are usually separated from each other and wound up on a core (not shown). Usually, two slitting knives 3 are used for cutting the tube shaped web into the upper 19 and lower 18 sheets. The slitting knives 3 are arranged at opposing edges of the lay flay tube shaped web at a common serration line 17. This cutting step is also called edge slitting or edge cutting and provides no scrap or waste of web material.

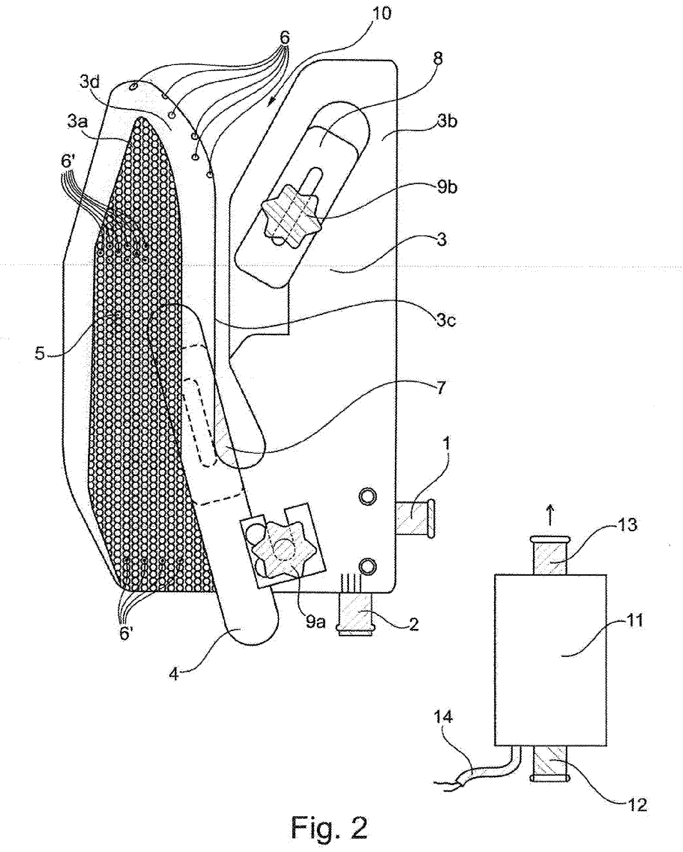

The slitting knife used is shown in fig. 2, and comprises a knife body 3 having a first body part 3a and a second body part 3b. Between the first 3a and the second 3b body part is a slit 10, in which at least a primary knife blade 7, and preferably also a secondary knife blade 8 is arranged. The first 7 and the second 8 blades are fixed in the knife body 3 with fastening means 9a, 9b, such as a screw or a bolt and nut connection. The first body part 3a is intended for positioning at the interior side of the tube shaped web 16, and the second bod part 3b at the exterior of the lay flat tube shaped web 16. The knife body 3 comprises a non-conductive hose adapter 1 or 2. The knife body 3 comprises means for introducing ionised air to the interior of the tube shaped web 16 and comprises at least one air passage (not shown) inside the knife body 3and air nozzles 6 are arranged at the edge 3c of the first body part 3b which faces towards the slit 10. In addition nozzles are provided at an oblique surface 3d, extending toward s the edge 3c of the first body part 3a. The air nozzles 6 blow pressurised air between the upper and the lower layer of the lay flat tube shaped web 16 in order to separate the upper 19 and the lower web 18 from each other at least at an area 15 travelling towards the edge slitting knife.

Pressurised air is preferably applied at a pressure of 2-10 bar, such as 4-8 bar, or preferably 5-7 bar, at the air hose adaptor 1 or an alternative air hose adaptor 2.

In order to ensure that an air cushion effect is applied to the whole surface of the first body part 3a of the knife, indentations 5 are provided in at least a central part of the upper and lower surface. The shape of the indentations is e.g. of circular, oval or polygonal, such as longitudinal channels, rectangular or square shape, in particular a so-called "Golf-ball" surface, having circular indentations. This allows for the ionised air to accumulate in the indentations, which then result in an ionised air cushion effect in the area with indentations. Additional ionised air nozzles 6' may be provided in at least some of the indentations and/or between the indentations 5.

In order to be able to provide ionised air to the interior side of the tube shaped web, an air ioniser 11 is connected to an inlet air hose adapter 1 or 2. The air ioniser comprises means for ionising pressurized air supplied to the supply air inlet 12 of the ioniser and passes ionised air to the edge slitting knife 3 via the outlet hose adaptor 13. A cord 14 connects the ioniser to an AC/DC power source.

The present invention provides an air ioniser 11 based on either AC or pulsed DC technologies for optimizing control of the electrostatic effect acting on the opposing inner surfaces of the tube shaped web 16.

AC technology applies normal mains voltage and boosts it, typically up to 4-10 kV, preferably around 7kV, through a transformer. This high voltage is then carried to an array of emitter pins to create a high energy "corona". A very large number of positive and negative ions are generated in the pressurised air passing through the air ioniser following the AC cycle (typically 50-60 hz).

An electrostatically charged surface, or at least the part of the surface, of either polarity will be neutralised quickly, when the surface is exposed to the pressurised ionised air.

Pulsed DC technology allows control of not only frequency, i.e. the frequency of shifts between a positive DC current and a negative DC current, but also the ion balance, i.e. the relative proportion of positive and negative ions. Mains voltage is transformed into high voltage, such as from 6 - 14 kV peak to peak. The pulses are split into positive and negative outputs and connected to dedicated emitters. Alternating clouds of positive and negative ions are produced in accordance with the chosen frequency setting, preferably between 0.5 and 20Hz. The balance control between positive and negative ions allows the ion output to be adjusted to suit the charge polarity on the relevant surfaces. A pulsed DC air ioniser enables that the output wave form (of the voltage wave curve) can be altered and the duration of the negative and positive section of the wave form can be increased or decreased. Thus, pulsed DC systems can control the amount of positive and negative ions supplied to the pressurised air thereby also control the electrostatic effect of the surfaces and provide an electrostatic effect on the web surfaces which for repelling from the knife body 3, or at least the first part 3a, which is in contact with the web. This repelling effect in combination with the above mentioned air cushion effect results in very little contact between the travelling web 16, 18, 19 and the knife body part 3.

This allows the knife body 3 to be produced in a polymeric material, preferably a polymer, in particular an electrically non-conducting polymer, in particular polymers which are approved for contact with foodstuffs. Preferably, the entire knife body 3 is cast from the polymeric material.

The preferred polymer is a homo- or copolymer of polyethylene terephthalate (PET, also called PET-P) high density polyethylene (HD-PE), polypropylene (PP), the latter in particular as a copolymer with polyethylene, polysulfone (PSU), polyetherether ketone (PEEK), or mixtures thereof.

In one embodiment, the knife body comprises a metal, or steel, core onto which the polymeric material is cast.

Electrical properties, i.e. non conducting properties, of the polymeric material, in particular PET, allows the use of pressurised ionised air as discussed above, which further improves the above discussed control of and/or neutralisation of electrostatic surfaces as discussed above.

Thus, the optimal combination is a knife body made of PET combined with an AC or preferably a DC ioniser 11 for ionising the pressurised air supplied to the edge slitting knife 3.

The knife body may 3 also comprise guiding wheels (not shown) in the slit 10, where the guiding wheels are arranged to contact the folded edge in the tube shaped web 16 and for reducing contact between the knife body 3 and the web 16, 18, 19 during edge slitting and for guiding the web 16 to the blade 7 and thereby provide improved quality of the edge slitting, and thus improving quality of the resulting web.

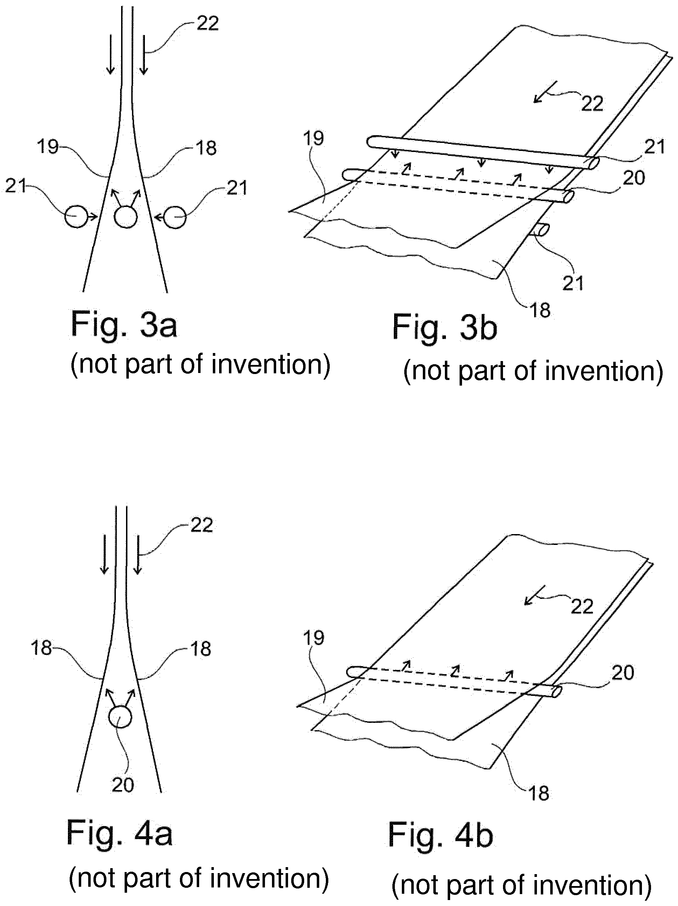

In an alternative embodiment (figs 3a, 3b), which does not form part of the present invention ionised pressurised air is supplied to an air bar 20 arranged between the at least two sheets 18, 19 and perpendicular to the travelling direction 22 of the web material 18, 19. Preferably the ionised air bar comprises a standard air bar, preferably of plastic material, such as PET as discussed above, to which an air ioniser (not shown), as discussed above, is provided at the air inlet as discussed in connection with the knife body. The ionising air bar 20 is provided at a position just after separation of the web sheets 18, 19 and the nozzles (not shown) on the ionising air bar 20 blows ionised air towards the sheets travelling towards the ionising air bar. Thus, the ionised air is directed towards the sheets at a point where the sheets are intended to separate, e.g. because each sheet of web is subsequently to be wound up on a core.

Standard ionising bars 21 provided above and/or below the travelling web may apply an ionising effect on the opposite sides of the web as shown in fig. 3a-3b.

However, since the electrostatic effect can be efficiently controlled by providing the pressurised ionised air between the web sheets from the ionising air bar 20, i.e. between the web sheets 18, 19, the standard ionising bars 21 can be dispensed with as shown in fig. 4a-4b.

In addition, the air bar may be an air bar for guiding the web or film onto a roller core as discussed in WO 2013/0156036 A, which is hereby incorporated by reference (not shown). The air bar discussed herein for guiding a web onto a core when winding the web onto the core is hollow and comprises at least two or more internal compartments extending along the length of said air bar for applying pressurised air of different pressure to at two or more rows of air nozzles. The air supply inlet to the air bar, or to each compartment of the air bar, may thus be provided with an air ioniser as described above. Thereby, ionised pressurised air having certain particular polarity, which causes a change in polarity on the web surface and further improves the air cushion effect by repelling the web material from the air bar and/or other machinery parts. This may be provided by using a pulsed DC air ioniser, on the pressurised air inlet(s). The air bar is preferably also made of a polymer material, as discussed above, or the internal air passages and the air nozzles, including preferably also the exterior surface, are coated with a polymer material as discussed above.

The ionising pressurised air bar 20 and the edge slitting knife 3 providing ionising pressurized air can be used alone and/or in combination.

## Claims

1. A web processing apparatus for processing a tube shaped web material (16) into one or more sheets of the web material or at least two webs having one surface of the web opposed towards one surface of the other web and which are forwarded through the apparatus in parallel, where the apparatus comprises means (3) for introducing ionised air into the area between two essentially parallel and opposing surfaces of the web material (16) wherein the means for introducing ionised air comprises at least one air passage and air nozzles (6, 6') in a knife body (3) of a slitting knife, and **characterized in that** at least the air passages, and preferably also coating covering the knife body (3) surface, are made of an electrically non-conducting material, such as a polymeric material.

2. A web processing apparatus according to claim 1, wherein the polymeric material is a homo- or copolymer of polyethylene terephthalate (PET), high density polyethylene (HD-PE), polypropylene (PP) and in particular as a copolymer with polyethylene, polysulfone (PSU), polyetherether ketone (PEEK), or mixtures thereof.

3. A web processing apparatus according claim 1 or 2, wherein the knife body (3) is made of a homo- or copolymer of polyethylene terephthalate (PET).

4. Slitting knife for an apparatus for processing a web (16), such as a tube shaped web, and for cutting the web into one or more sheets of the web material, comprising a knife body having a slit (10) in which one or more blades (7) are arranged for cutting the web material when introduced into the slit, and wherein the knife body comprises a first body (3a) part intended for passage at the internal side of the web material and a second body part (3b) intended for passage at the opposite side of the web material, wherein the knife body (3) comprises means for introducing and passing air to air nozzles (6) arranged in the slit area (10) of at least the first body part for introducing air to the internal side of the web material, wherein an air ioniser (11) is connected to an air inlet (2) of the knife body (3) for ionising the air to be passed to the air nozzles (6, 6'), and **characterized in that** at least the air inlet, the air passages, the air nozzles (6, 6') and preferably also coating covering the knife body surface are made of a polymeric material.

5. Slitting knife according to claim 4, wherein the polymeric material is a homo- or copolymer of polyethylene terephthalate (PET), high density polyethylene (HD-PE), polypropylene (PP) in particular as a copolymer with polyethylene, polysulfone (PSU), polyether ether ketone (PEEK), or mixtures thereof.

6. A method for processing a tube shaped web material (16) into one or more sheets of the web material or at least two webs having one surface of the web opposed towards one surface of the other web and which are forwarded through the apparatus in parallel, comprising introducing ionised air into the area between two essentially parallel and opposing surfaces of the web material, wherein ionised air is introduced through at least one air passage and air nozzles (6, 6') in a knife body (3) of a slitting knife, and **characterized in that** at least the air passage and the nozzles (6, 6'), and preferably also the outer surface of the knife body (3), comprises a electrically non-conducting material.

## Patentansprüche

1. Bahnverarbeitende Vorrichtung zum Verarbeiten eines rohrförmigen Bahnmaterials (16) in eine oder mehrere Schichten des Bahnmaterials oder in mindestens zwei Bahnen, die eine Fläche der Bahn gegenüberliegend zu einer Fläche der anderen Bahn aufweisen, welche durch die Vorrichtung parallel weitergeleitet werden, wobei die Vorrichtung Mittel (3) zum Einführen von ionisierter Luft in dem Bereich zwischen zwei im Wesentlichen parallelen und gegenüberliegenden Flächen des Bahnmaterials (16) umfasst, wobei die Mittel zum Einführen von ionisierter Luft mindestens einen Luftdurchlass und Luftdüsen (6, 6') in einem Messerkörper (3) eines Trennmessers umfassen, und die **dadurch gekennzeichnet ist, dass** mindestens die Luftdurchlässe und vorzugsweise auch eine Beschichtung, die die Messerkörperfläche (3) bedeckt, aus einem elektrisch nichtleitenden Material, wie etwa einem Polymermaterial, hergestellt sind.

2. Bahnverarbeitende Vorrichtung nach Anspruch 1, wobei das Polymermaterial ein Homo- oder ein Copolymer von Polyethylenterephthalat (PET), ein Polyethylen mit hoher Dichte (HD-PE), ein Polypropylen (PP) und insbesondere als ein Copolymer mit Polyethylen, ein Polysulfon (PSU), ein Polyetheretherketon (PEEK) oder Mischungen daraus ist.

3. Bahnverarbeitende Vorrichtung nach Anspruch 1 oder 2, wobei der Messerkörper (3) aus einem Homo- oder Copolymer von Polyethylenterephthalat (PET) hergestellt ist.

4. Trennmesser für eine Vorrichtung zum Verarbeiten einer Bahn (16), wie etwa eine rohrförmige Bahn, und zum Schneiden der Bahn in eine oder mehrere Schichten des Bahnmaterials, einen Messerkörper umfassend, der einen Schlitz (10) aufweist, in welchem eine oder mehrere Klingen (7) zum Schneiden des Bahnmaterials angeordnet sind, wenn es in den Schlitz eingeführt wird, und wobei der Messerkörper einen ersten Körper(3a)-Abschnitt, der zum Durchlass an der Innenseite des Bahnmaterials gedacht ist, und einen zweiten Körperabschnitt (3b) umfasst, der zum Durchlass an der gegenüberliegenden Seite des Bahnmaterials gedacht ist, wobei der Messerkörper (3) Mittel zum Einführen und Durchlassen von Luft zu Luftdüsen (6), die in dem Schlitzbereich (10) des mindestens ersten Körperabschnitts zum Einführen von Luft zu der Innenseite des Bahnmaterials angeordnet sind, umfasst, wobei ein Luftionisierer (11) mit einem Lufteinlass (2) des Messerkörpers (3) zum Ionisieren der zu den Luftdüsen (6, 6') durchzulassenden Luft verbunden ist, und das **dadurch gekennzeichnet ist, dass** der mindestens eine Lufteinlass, die Luftdurchlässe, die Luftdüsen (6, 6') und vorzugsweise auch die Beschichtung, die die Messerkörperfläche bedeckt, aus einem Polymermaterial hergestellt sind.

5. Trennmesser nach Anspruch 4, wobei das Polymermaterial ein Homo- oder ein Copolymer von Polyethylenterephthalat (PET), ein Polyethylen mit hoher Dichte (HD-PE), ein Polypropylen (PP) und insbesondere als ein Copolymer mit Polyethylen, ein Polysulfon (PSU), ein Polyetheretherketon (PEEK) oder Mischungen daraus ist.

6. Verfahren zum Verarbeiten eines rohrförmigen Bahnmaterials (16) in eine oder mehrere Schichten des Bahnmaterials oder in mindestens zwei Bahnen, die eine Fläche der Bahn gegenüberliegend zu einer Fläche der anderen Bahn aufweisen, welche durch die Vorrichtung parallel weitergeleitet werden, das Einführen von ionisierter Luft in den Bereich zwischen den im Wesentlichen parallelen und gegenüberliegenden Seiten des Bahnmaterials umfassend, wobei die ionisierte Luft durch mindestens einen Luftdurchlass und Luftdüsen (6, 6') in einem Messerkörper (3) eines Trennmessers eingeführt wird, und das **dadurch gekennzeichnet ist, dass** mindestens der Luftdurchlass und die Düsen (6, 6') und vorzugsweise auch die Außenfläche des Messerkörpers (3) ein elektrisch nichtleitendes Material umfassen.

## Revendications

1. Appareil de traitement de bande pour traiter un matériau en bande en forme de tube (16) en une ou plusieurs feuilles du matériau en bande ou au moins deux bandes ayant une surface de la bande opposée vers une surface de l'autre bande et qui sont acheminées à travers l'appareil en parallèle, où l'appareil comprend un moyen (3) pour introduire de l'air ionisé dans la zone entre deux surfaces sensiblement parallèles et opposées du matériau en bande (16) dans lequel le moyen pour introduire de l'air ionisé comprend au moins un passage d'air et des buses d'air (6, 6') dans un corps de couteau (3) d'un couteau à refendre, et **caractérisé en ce qu'**au moins les passages d'air, et de préférence aussi un revêtement recouvrant la surface du corps de couteau (3), sont réalisés en un matériau non électroconducteur, tel qu'un matériau polymère.

2. Appareil de traitement de bande selon la revendication 1, dans lequel le matériau polymère est un homo- ou copolymère de polytéréphtalate d'éthylène (PET), polyéthylène haute densité (HD-PE), polypropylène (PP) et en particulier en tant que copolymère avec polyéthylène, polysulfone (PSU), polyéther-éther-cétone (PEEK), ou des mélanges de ceux-ci.

3. Appareil de traitement de bande selon la revendication 1 ou 2, dans lequel le corps de couteau (3) est réalisé en un homo- ou copolymère de polytéréphtalate d'éthylène (PET).

4. Couteau à refendre pour un appareil pour traiter une bande (16), telle qu'une bande en forme de tube, et pour couper la toile en une ou plusieurs feuilles du matériau en bande, comprenant un corps de couteau ayant une fente (10) dans laquelle une ou plusieurs lames (7) sont agencées pour couper le matériau en bande lorsque introduit dans la fente, et dans lequel le corps de couteau comprend une première partie de corps (3a) destinée au passage au niveau du côté interne du matériau en bande et une deuxième partie de corps (3b) destinée au passage au niveau du côté opposé du matériau en bande, dans lequel le corps de couteau (3) comprend un moyen pour introduire et faire passer de l'air à des buses d'air (6) agencées dans la zone de fente (10) d'au moins la première partie de corps pour introduire de l'air au côté interne du matériau en bande, dans lequel un ioniseur d'air (11) est connecté à une entrée d'air (2) du corps de couteau (3) pour ioniser l'air à faire passer aux buses d'air (6, 6'), et **caractérisé en ce qu'**au moins l'entrée d'air, les passages d'air, les buses d'air (6, 6') et de préférence aussi un revêtement recouvrant la surface du corps de couteau sont réalisés en un matériau polymère.

5. Couteau à refendre selon la revendication 4, dans lequel le matériau polymère est un homo- ou copolymère de polytéréphtalate d'éthylène (PET), polyéthylène haute densité (HD-PE), polypropylène (PP) et en particulier en tant que copolymère avec polyéthylène, polysulfone (PSU), polyéther-éther-cétone (PEEK), ou des mélanges de ceux-ci.

6. Procédé de traitement d'un matériau en bande en forme de tube (16) en une ou plusieurs feuilles du matériau en bande ou au moins deux bandes ayant une surface de la bande opposée vers une surface de l'autre bande et qui sont acheminées à travers l'appareil en parallèle, comprenant l'introduction d'air ionisé dans la zone entre deux surfaces sensiblement parallèles et opposées du matériau en bande, dans lequel de l'air ionisé est introduit à travers au moins un passage d'air et des buses d'air (6, 6') dans un corps de couteau (3) d'un couteau à refendre, et **caractérisé en ce qu'**au moins le passage d'air et les buses (6, 6'), et de préférence aussi la surface extérieure du corps de couteau (3), comprend un matériau non électroconducteur.
